# EUROPÄISCHE PATENTANMELDUNG

(11) **EP 3 382 675 A1**
(43) Veröffentlichungstag der Anmeldung: **03.10.2018**
(21) Anmeldenummer: 18162935.3
(22) Anmeldetag: 20.03.2018
(51) Int. Cl.: G09B 9/04, B60W 50/10, B60W 50/14

(54) **TECHNIK ZUR EINBEZIEHUNG EINER BEDIENUNGSANLEITUNG IN DIE FAHRZEUGBEDIENUNG**

(30) Priorität: 31.03.2017 DE 102017003079
(71) Anmelder: MAN Truck & Bus AG, 80995 München (DE)
(72) Erfinder: Mohra, Holger, 80805 München (DE); Arnold, Claus, 93161 Sinzing (DE); Zademach, Martin, 85232 Bergkirchen (DE); Güllich, Johannes, 85229 Markt Indersdorf (DE); Laber, Christoph, 86150 Augsburg (DE)
(74) Vertreter: v. Bezold & Partner Patentanwälte - PartG mbB

(57) **Zusammenfassung**

Eine Technik zur Einbeziehung einer Bedienungsanleitung (128) in die Bedienung eines Fahrzeugs wird beschrieben. Ein Vorrichtungsaspekt der Technik umfasst eine Anzeigeeinheit (102), die im Fahrzeug angeordnet oder anordenbar ist; eine Eingabeeinheit, die im Fahrzeug angeordnet oder anordenbar ist; und eine mit der Anzeigeeinheit (102) und der Eingabeeinheit in Signalverbindung stehende oder bringbare Steuerungseinheit. Steuerungseinheit speichert eine Bedienungsanleitung (128) mit einer Vielzahl von Abschnitten (130), wobei jedem Abschnitt (130) mindestens ein Fahrzeugbezug zugeordnet ist, erfasst Signale mit einem Fahrzeugbezug, zeigt an der Anzeigeeinheit eine Fahrzeugmeldung (122) an, die den erfassten Fahrzeugbezug angibt und einen Verweis auf die Bedienungsanleitung (128) umfasst, der durch eine erste Betätigung der Eingabeeinheit anwählbar ist, und stellt in Reaktion auf die erste Betätigung der Eingabeeinheit die Bedienungsanleitung (128) mittels der Anzeigeeinheit und der Eingabeeinheit bereit, wobei die Anzeigeeinheit einen Ausschnitt der Bedienungsanleitung (128) mittels der Anzeigeeinheit anzeigt, welcher mindestens einen Teil des dem erfassten Fahrzeugbezug zugeordneten Abschnitts (130) umfasst.

## Beschreibung

Die Erfindung betrifft eine Technik zur Einbeziehung einer Bedienungsanleitung bei der Bedienung eines Fahrzeugs, beispielsweise eines Nutzfahrzeugs. Insbesondere sind eine Vorrichtung zur Einbeziehung der Bedienungsanleitung und ein mit einer solchen Vorrichtung ausgestattetes Fahrzeug beschrieben.

Die Bedienungsanleitung eines Fahrzeugs kann einige hundert Seiten umfassen. Um diese Unterlagen übersichtlicher und benutzerfreundlicher zu gestalten, werden umfangreiche Ausstattungen wie Navigationssystem, audiovisuelle Systeme oder Telefon oft in separaten Heften beschrieben. Zudem beschreiben die meisten Bedienungsanleitungen alle verfügbaren Ausstattungen eines Fahrzeugs, so dass der Fahrer die für seine Fahrzeugausstattung zutreffenden Texte und Daten selber heraussuchen muss, was sehr umständlich ist und zu Missverständnissen oder sogar Bedienungsfehlern führen kann.

Dies trifft insbesondere für Berufskraftfahrer zu, da diese den spezifischeren und komplexeren Funktionsumfang von Nutzfahrzeugen beherrschen müssen bei wechselnden Fahrzeugen und häufig ohne Einarbeitungszeit. Die vielfältigen Funktionen, Einstellungsmöglichkeiten und Warnmeldungen im Cockpit eines Lastkraftwagen (LKWs), die sich je nach Modell und Hersteller unterscheiden, erschweren LKW-Fahrern oft eine intuitive Bedienung des Fahrzeugs. LKW-Fahrer müssen nicht nur die Funktionen schnell erfassen, sondern auch Ursachen von Warnmeldungen und Gefahrenmeldungen richtig einschätzen, um ein zugrundeliegendes Problem schnell zu beheben.

Eine Einbeziehung einzelner Erläuterungen, beispielsweise in Menüstrukturen oder Warnmeldungen, verbessert die Bedienung im Allgemeinen nicht, da der Fahrer bei Kenntnis der notwendigen Bedienschritte eine solche Erläuterung als überflüssig oder sogar störend empfindet, während bei fehlender Kenntnis die eingebettete Erläuterung unzulänglich ist. Zudem führen einzelne eingebettete Funktionserläuterungen zu einem fragmentarischen Verständnis des Funktionsumfangs und damit zu einem erhöhten Risiko von Fehlbedingungen.

Die steigende Anzahl an Funktionen im Fahrzeug und damit einhergehende Mehrung von Bedienelementen und Menüstrukturen erschweren die intuitive Bedienung des Fahrzeugs. Für die Bedienung relevante Informationen, die oftmals situationsbezogen und fahrzeugspezifisch sind, müssen vom Fahrer in einem Handbuch oder dessen digitaler Version unter Zeitverlust aufgefunden werden. Dadurch können Fehlermeldungen erst mit Zeitverzögerung behoben werden, beispielsweise wenn die Ursache bzw. die Handlungsempfehlung im Handbuch eigenständig recherchiert ist durch eine Stichwortsuche in einem gedruckten oder digitalen Register. Eine solche Stichwortsuche benötigt jedoch Vorwissen, beispielsweise eine hersteller- oder fahrzeugspezifische Bezeichnung einer Funktion. Für eine allgemeine Einarbeitung anhand einer Bedienungsanleitung in gedruckter oder digitaler Fassung vor einer Fahrt fehlt in der Regel die erforderliche Zeit.

Somit ist eine Aufgabe der vorliegenden Erfindung, eine zeiteffiziente und informierte Bedienung eines Fahrzeugs bei wachsendem Funktionsumfangs sicherzustellen. Eine weitere oder alternative Aufgabe der Erfindung ist, dem Fahrer eine situationsbezogene und zusammenhängende Darstellung der Fahrzeugbedienung bereitzustellen.

Diese Aufgabe oder Aufgaben werden durch eine Vorrichtung zur Einbeziehung einer Bedienungsanleitung in die Bedienung eines Fahrzeugs mit den Merkmalen des Anspruchs 1 gelöst.

Gemäß einem Aspekt umfasst eine Vorrichtung eine Anzeigeeinheit, die im Fahrzeug angeordnet oder anordenbar ist; eine Eingabeeinheit, die im Fahrzeug angeordnet oder anordenbar ist; und eine mit der Anzeigeeinheit und der Eingabeeinheit in Signalverbindung stehende oder bringbare Steuerungseinheit. Die Steuerungseinheit ist dazu ausgebildet, eine Bedienungsanleitung mit einer Vielzahl von Abschnitten zu speichern, wobei jedem Abschnitt mindestens ein Fahrzeugbezug zugeordnet ist, Signale mit einem Fahrzeugbezug zu erfassen, eine Fahrzeugmeldung an der Anzeigeeinheit anzuzeigen, die den erfassten Fahrzeugbezug angibt und einen Verweis auf die Bedienungsanleitung umfasst, der durch eine erste Betätigung der Eingabeeinheit anwählbar ist, und in Reaktion auf die erste Betätigung der Eingabeeinheit die Bedienungsanleitung mittels der Anzeigeeinheit und der Eingabeeinheit bereitzustellen, wobei die Anzeigeeinheit einen Ausschnitt der Bedienungsanleitung mittels der Anzeigeeinheit anzeigt, welcher mindestens einen Teil des dem erfassten Fahrzeugbezug zugeordneten Abschnitts umfasst.

Der Fahrzeugbezug kann eine Fahrzeugfunktion oder eine Fahrzeugkomponente betreffen, angeben oder bestimmen. Jedem Abschnitt kann der Fahrzeugbezug zugeordnet sein, indem jedem Abschnitt eine Fahrzeugfunktion oder eine Fahrzeugkomponente zugeordnet ist. Beispielsweise kann dem Abschnitt eine Kennung der Fahrzeugfunktion oder Fahrzeugkomponente zugeordnet sein. Das erfasste Signal mit dem Fahrzeugbezug kann die Kennung umfassen.

Das Speichern kann realisiert sein durch ein Vorhalten der gespeicherten Bedienungsanleitung, beispielsweise in einem Speicher der Steuerungseinheit. Alternativ oder ergänzend kann das Speichern realisiert sein durch eine Zugriffsmöglichkeit der Steuerungseinheit auf die gespeicherte Bedienungsanleitung.

Die Betätigung (insbesondere die erste Betätigung) kann eine mechanische Bewegung an der Eingabeeinheit, eine (beispielsweise berührungslose oder streifende) Geste (insbesondere der Finger) und/oder eine Spracheingabe umfassen. Die Eingabeeinheit kann mindestens einen Griff umfassen, beispielsweise einen Dreh-Drück-Steller. Die Betätigung kann eine Bewegung des Griffs umfassen. Alternativ oder ergänzend können Anzeigeeinheit und Betätigungseinheit eine berührungsempfindliche Anzeigefläche umfassen, an der die Betätigung ausführbar ist. Alternativ oder ergänzend kann die Eingabeeinheit ein Mikrofon umfassen und zur Spracherkennung eines vom Mikrofon erfassten Signals ausgebildet sein.

Der in der Fahrzeugmeldung angezeigte Verweis kann den Abschnitt der Bedienungsanleitung angeben (beispielsweise als Text oder Symbol an der Anzeigeeinheit), der dem erfassten Fahrzeugbezug zugeordnet ist. Der Verweis kann auch als "Link" bezeichnet werden.

Vorzugsweise kann die Steuerungseinheit dazu ausgebildet sein, die Betriebsanleitung (beispielsweise im Fall des angezeigten Verweises) ausschließlich in Reaktion auf die erste Betätigung der Eingabeeinheit bereitzustellen. Dadurch kann eine den Fahrer störende oder sogar als bevormundend empfundene Belehrung unterbleiben.

Ausgehend vom angezeigten Ausschnitt der Bedienungsanleitung können durch eine zweite Betätigung der Eingabeeinheit weitere Abschnitte der Bedienungsanleitung bereitstellbar sind. Die Bedienungsanleitung oder dessen Abschnitte können mittels der Anzeigeeinheit und der Eingabeeinheit bereitgestellt werden, beispielsweise indem ein Ausschnitt (beispielweise ein Abschnitt oder ein Teil eines Abschnitts) von der Anzeigeeinheit angezeigt wird und der angezeigte Ausschnitt durch die zweite Betätigung der Eingabeeinheit veränderbar ist.

Der Fahrzeugbezug kann einen Fahrzeugzustand (des Fahrzeugs, einer bestimmten Fahrzeugfunktion oder einer bestimmten Fahrzeugkomponente) betreffen, angeben oder bestimmen oder umfassen. Alternativ oder in Kombination kann die Fahrzeugmeldung eine Zustandsmeldung des Fahrzeugs umfassen, die beispielsweise den Fahrzeugzustand angibt. Der Fahrzeugbezug kann ein Fahrzeugzustand, eine Fahrzeugkomponente, ein Fehlerstatus und/oder ein Sensorwert (beispielsweise ein Füllstand) sein. Die Fahrzeugmeldung kann eine Zustandsmeldung, einen Warnhinweis, Konfigurationsparameter (beispielsweise der Fahrzeugfunktion oder Fahrzeugkomponente) oder eine Fehlermeldung umfassen. Der zugeordnete Abschnitt kann eine Handlungsanweisung beispielsweise zur Bestimmung der Konfigurationsparameter, Fehlerbehebung, eine Handlungsempfehlung, eine Wartungsanweisung oder einen Pflegehinweis umfassen.

Dem erfassten Fahrzeugzustand können verschiedene Abschnitte der Bedienungsanleitung zugeordnet sind. Die zugeordneten Abschnitte der Bedienungsanleitung können Kriterien zur Differenzierung des Fahrzeugzustands angeben oder umfassen. Beispielsweise können die Kriterien zur Differenzierung des Fahrzeugzustands in Zuordnung zu jedem der verschiedenen Abschnitte gespeichert sein. Die Steuerungseinheit kann dazu ausgebildet sein, durch Betätigung der Eingabeeinheit zwischen dem Anzeigen der verschiedenen Abschnitte umzuschalten. Alternativ oder ergänzend kann die Steuerungseinheit dazu ausgebildet sein, mittels der Anzeigeeinheit und der Eingabeeinheit die Kriterien abzufragen, und aufgrund der Abfrage einen der verschiedenen Abschnitte der Bedienungsanleitung bereitzustellen. Die (beispielsweise angezeigten oder abgefragten) Kriterien können eine Bestimmung der Ursache des Fahrzeugzustands ermöglichen.

Die Abschnitte der Bedienungsanleitung können fahrzeugspezifische Angaben enthalten. Beispielsweise kann der Fahrzeugzustand einen Ölstand umfassen. Der dem Fahrzeugzustand zugeordnete Abschnitt kann eine Sorte, einen Typ, eine Klassifikation oder eine Spezifikationen eines fahrzeugspezifischen Öls umfassen.

Dem erfassten Fahrzeugbezug kann eine Häufigkeit zugeordnet sein. Die Steuerungseinheit kann dazu ausgebildet sein, den Verweis in der Fahrzeugmeldung anzeigen, falls die zugeordnet Häufigkeit kleiner als ein Schwellwert ist. Zu einzelnen oder allen Fahrzeugbezügen (beispielsweise einzelnen oder allen Fahrzeugzuständen) kann ein Wert für die Häufigkeit (beispielsweise eine Wahrscheinlichkeit oder eine mittlere Periodizität) für das Auftreten des jeweiligen Fahrzeugzustands gespeichert sein, beispielsweise in der Steuerungseinheit. Die Häufigkeit kann durch die Steuerungseinheit gemessen werden, beispielsweise durch einen Zähler, der beim Erfassen des jeweiligen Fahrzeugbezugs (beispielsweise beim Auftreten des jeweiligen Fahrzeugzustands) inkrementiert wird.

Alternativ oder ergänzend kann die Fahrzeugmeldung eine Bestimmung von Konfigurationsparametern ermöglichen. Der Verweis kann in der Fahrzeugmeldung angezeigt werden, falls eine Komplexität der Konfiguration (beispielsweise eine Anzahl der Konfigurationsparameter) größer als ein Schwellwert ist.

Das Erfassen des Fahrzeugbezugs (d.h. das Erfassen des Signals mit dem Fahrzeugbezug) kann das Anzeigen der Fahrzeugmeldung bewirken. Die Steuerungseinheit kann dazu ausgebildet sein, die Fahrzeugmeldung in Reaktion auf das Erfassen des Fahrzeugbezugs anzuzeigen.

Das Erfassen des Fahrzeugbezugs (d.h. das Erfassen des Signals mit dem Fahrzeugbezug) kann das Erfassen eines (beispielsweise fahrzeuginternen oder fahrzeugexternen) Ereignisses umfassen. Beispielsweise kann ein fahrzeuginternes oder fahrzeugexternes Signal erfasst werden. Beispielsweise kann im Betrieb des Fahrzeugs ein Datensignal eines Fahrzeugsensors erfasst werden. Alternativ oder ergänzend kann ein fahrzeugexternes Funksignal empfangen werden. Das Ereignis, beispielsweise das Signal, kann das Anzeigen der Fahrzeugmeldung bewirken.

Eine packetvermittelte Datenverbindung (beispielsweise ausgehend von einem Smartphone) oder ein eingehender Telefonanruf können Beispiele für ein fahrzeugexternes Signal sein. Als Beispiel für ein fahrzeuginternes Signal kann das Erfassen des Fahrzeugbezugs einen Aufruf eines Konfigurationsmenüs mittels der Eingabeeinheit umfassen. Das Anzeigen der Fahrzeugmeldung kann das Anzeigen des Konfigurationsmenüs mittels der Anzeigeeinheit umfassen. Das aufgerufene Konfigurationsmenü kann eine Fahrzeugfunktion oder eine Fahrzeugkomponente betreffen oder bestimmen. Der Fahrzeugbezug (beispielsweise das aufgerufene Konfigurationsmenü) kann die Fahrzeugfunktion oder die Fahrzeugkomponente umfassen. Die Fahrzeugmeldung kann das Konfigurationsmenü umfassen.

Das Erfassen des Fahrzeugbezugs oder eine der Betätigungen der Eingabeeinheit kann das Erfassen einer Spracheingabe mittels der Eingabeeinheit umfasst. Der Fahrzeugbezug, die erste Betätigung und/oder die zweite Betätigung kann eine Spracheingabe umfassen. Die erfasste Spracheingabe kann eine Fahrzeugfunktion oder eine Fahrzeugkomponente bestimmen. Die erfasste Spracheingabe kann einen allgemeinen Begriff oder Stichwort mit Fahrzeugbezug (beispielsweise "Fahrzeuginformation") umfassen, beispielsweise als Signal zur Bestimmung eines spezifischen Fahrzeugbezugs auf Grundlage einer sich anschließenden Spracheingabe.

Die Steuerungseinheit kann in Funkkommunikation (beispielsweise als die Signalverbindung) mit einer tragbaren Kommunikationseinheit (beispielsweise einem Mobilfunkgerät) stehen oder bringbar sein. Die Funkkommunikation kann eine packetvermittelte Datenverbindung umfassen. Die tragbare Kommunikationseinheit kann (beispielsweise mittels eines berührungsempfindlichen Bildschirms der Kommunikationseinheit und/oder einer von der Kommunikationseinheit ausgeführten Benutzeranwendung) die Funktion der Eingabeeinheit und/oder die Funktion der Anzeigeeinheit teilweise oder vollständig realisieren. Die Steuerungseinheit kann dazu ausgebildet sein, beim Erfassen des Fahrzeugbezugs (beispielsweise beim Erfassen des Signals mit Fahrzeugbezug) ein von der Kommunikationseinheit fotografisch erfasstes Bild (beispielsweise als das Signal oder als Teil des Signals) über die Funkkommunikation zu erhalten und/oder mittels Bilderkennung einer Fahrzeugkomponente zuzuordnen. Der Fahrzeugbezug kann die fotografisch erfasste Fahrzeugkomponente sein. Die tragbare Kommunikationseinheit kann ein mit einer Kamera ausgestattetes Mobilfunkgerät (insbesondere ein Mobiltelefon oder entsprechend ausgestatteter Tablet-Computer) sein.

Die tragbare Kommunikationseinheit und die Steuerungseinheit können direkt in Funkkommunikation stehen. Alternativ oder ergänzend können die tragbare Kommunikationseinheit und die Steuerungseinheit jeweils mit einem zellularen Mobilfunknetz in Funkkommunikation stehen.

Alternativ oder ergänzend kann die Anzeigeeinheit ein Kombinationsinstrument und/oder eine sekundäre Anzeigefläche am Fahrerplatz des Fahrzeugs umfassen. Insbesondere kann die Anzeigeeinheit an einer Mittelkonsole des Fahrzeugs angeordnet sein.

Gemäß einem weiteren Aspekt ist ein Fahrzeug bereitgestellt, das eine Vorrichtung gemäß dem vorstehenden Aspekt umfasst. Beispielsweise kann im Fahrzeug eine Vorrichtung mit einer Anzeigeeinheit, einer Eingabeeinheit und einer Steuerungseinheit angeordnet sein. Insbesondere kann das Fahrzeug ein Fahrerhaus umfassen, in dem einzelne oder alle Merkmale der Vorrichtung angeordnet sind.

Das Fahrzeug kann ein Landfahrzeug, ein Wasserfahrzeug (beispielsweise ein Schiff oder Unterseeboot) oder ein Luftfahrzeug sein. Alternativ und in Kombination kann das Fahrzeug ein Nutzfahrzeug (beispielsweise ein Lastkraftwagen zur Güterbeförderung und/oder ein Bus zur Personenbeförderung) oder ein Personenkraftwagen sein.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: eine schematische Darstellung eines Fahrzeugs mit einem Ausführungs-beispiel einer Vorrichtung zur Einbeziehung einer Bedienungsanleitung in die Bedienung des Fahrzeugs;
- Figur 2A: eine schematische Darstellung einer ersten Implementierung einer Anzeigeeinheit der Vorrichtung der Figur 1;
- Figur 2B: eine schematische Darstellung der Anzeigeeinheit der ersten Implementierung in Reaktion auf eine Betätigung einer Eingabeeinheit der Vorrichtung der Figur 1;
- Figur 3A: eine schematische Darstellung einer zweiten Implementierung der Anzeigeeinheit;
- Figur 3B: eine schematische Darstellung der Anzeigeeinheit der zweiten Implementierung in Reaktion auf eine Betätigung der Eingabeeinheit;
- Figur 4A: eine schematische Darstellung einer dritten Implementierung der Anzeigeeinheit; und
- Figur 4B: eine schematische Darstellung der Anzeigeeinheit der dritten Implementierung in Reaktion auf eine Betätigung der Eingabeeinheit.

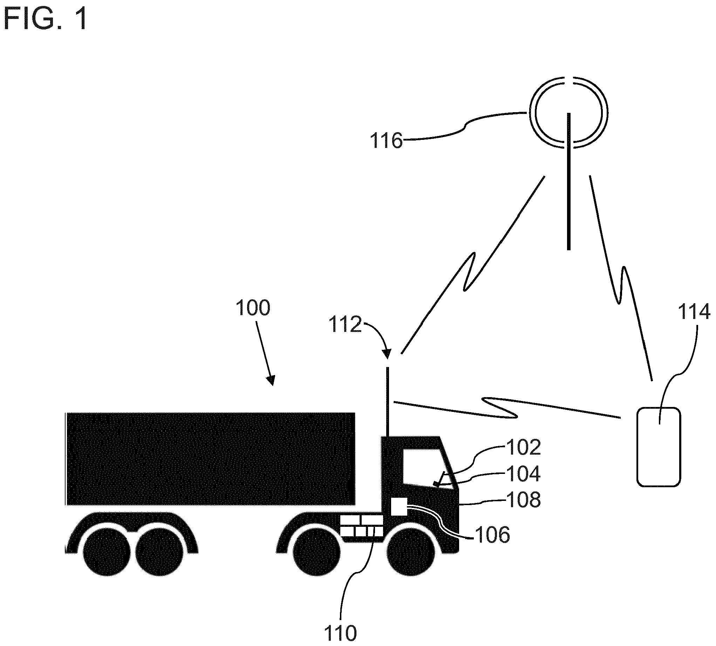

Figur 1 zeigt schematisch ein Ausführungsbeispiel einer Vorrichtung zur Einbeziehung einer Bedienungsanleitung in die Bedienung eines Fahrzeugs 100. Das Fahrzeug 100 kann, wie in Figur 1 beispielhaft dargestellt, ein Nutzfahrzeug sein, beispielsweise ein Lastkraftwagen, eine Sattelzugmaschine oder ein Bus.

Die Vorrichtung umfasst eine Anzeigeeinheit 102 und eine Eingabeeinheit 104, die jeweils mit einer im Fahrzeug 100 angeordneten Steuerungseinheit 106 verbunden sind. Vorzugsweise sind die Anzeigeeinheit 102 und die Eingabeeinheit 104 im Arbeitsbereich eines Fahrerarbeitsplatzes, beispielsweise in einem Fahrerhaus 108, angeordnet. Die Steuerungseinheit 106 hat Zugriff auf eine gespeicherte Bedienungsanleitung mit seiner Vielzahl von Abschnitten, denen jeweils ein Fahrzeugbezug zugeordnet ist.

Die Bedienungsanleitung kann vollständig im Fahrzeug 100 gespeichert sein, beispielsweise in einem Speicher der Steuerung 106. Alternativ oder zusätzlich kann die Bedienungsanleitung teilweise oder vollständig außerhalb des Fahrzeugs 100, beispielsweise auf einem Server, gespeichert sein, wobei die Steuerungseinheit 106 über eine mobile Datenverbindung auf die gespeicherte Bedienungsanleitung zugreift.

Der Zugriff auf die gespeicherte Bedienungsanleitung umfasst das Abrufen mindestens eines Abschnitts, dem ein gegebener Fahrzeugbezug zugeordnet ist. Hierbei erfasst die Steuerungseinheit 106 Signale mit einem Fahrzeugbezug und gibt eine dem erfassten Fahrzeugbezug entsprechende Fahrzeugmeldung an der Anzeigeeinheit 102 aus.

Die Signale können beispielsweise fahrzeugintern über einen seriellen Datenbus 110 (beispielsweise ein Controller Area Network oder CAN-Bus) erfasst werden. Zu den internen Fahrzeugsignalen mit Fahrzeugbezug gehört beispielsweise ein über den seriellen Bus 110 von einem Fahrzeugsensor erfasster Fahrzeugwert, der außerhalb eines vorbestimmten Betriebsbereichs ist. Ebenso ist eine Fehlermeldung oder eine Warnhinweis einer Fahrzeugkomponente ein Beispiel für ein fahrzeuginternes Signal, das (beispielsweise über den seriellen Bus 110) von der Steuerungseinheit 106 erfasst wird. Die Fahrzeugmeldung kann in diesem Fall die Fehlermeldung oder den Warnhinweis der jeweiligen Fahrzeugkomponente angeben.

Ferner kann vom Fahrer des Fahrzeugs 100 mittels der Eingabeeinheit 104 ein Signal mit Fahrzeugbezug erzeugt werden. Beispielsweise kann der Fahrer ein Konfigurationsmenü für eine bestimmte Fahrzeugfunktion oder eine bestimmte Fahrzeugkomponente an der Anzeigeeinheit 102 durch Betätigung der Eingabeeinheit 104 von der Steuerungseinheit 106 anzeigen lassen. In diesem Fall kann das angezeigte Menü ein Beispiel für die Fahrzeugmeldung sein.

Alternativ oder ergänzend kann die Steuerungseinheit 106 ein Funksignal mit einem Fahrzeugbezug über eine Mobilfunkschnittstelle 112 erfassen, beispielsweise von einer tragbaren Kommunikationseinheit 114 wie beispielsweise einem Mobilfunktelefon, einem Tablet-Computer oder einem Laptop-Computer. Die Kommunikation zwischen der Mobilfunkschnittstelle 112 und der tragbaren Kommunikationseinheit 114 kann eine direkte Funkverbindung oder eine Kommunikation über ein Mobilfunknetz 116 umfassen. Das erfasste Funksignal kann ein Sprachsignal oder ein (beispielsweise mittels einer in der tragbaren Kommunikationseinheit 114 eingebauten Kamera) aufgenommenes Bild sein. Das Sprachsignal oder das Kamerabild weisen einen Fahrzeugbezug auf, beispielsweise indem eine Komponente und/oder Funktion des Fahrzeugs 100 durch das aufgenommene Bild bestimmt ist. Dazu ist die Steuerungseinheit 106 oder ein externer Server zur Spracherkennung bzw. Bildanalyse auf Grundlage des Funksignals ausgebildet.

Die Fahrzeugmeldung umfasst einen Verweis auf die Bedienungsanleitung, der durch eine erste Betätigung der Eingabeeinheit 104 anwählbar ist. In Reaktion auf das Anwählen des Verweises stellt die Steuerungseinheit 106 mittels der Anzeigeeinheit 102 und der Eingabeeinheit 104 die Bedienungsanleitung bereit. Dazu zeigt die Anzeigeeinheit 102 einen Ausschnitt der Bedienungsanleitung an, der mindestens einen Teil des dem erfassten Fahrzeugbezug zugeordneten Abschnitts umfasst.

Der Verweis wird auch als Link oder Verlinkung bezeichnet. Optional wird der Verweis nur eingeblendet, wenn die Fahrzeugmeldung ein bestimmtes Maß für Seltenheit und/oder Komplexität überschreitet, beispielsweise hinsichtlich fahrzeugspezifischer Einstellungen oder einer Anzahl einstellbarer Konfigurationsparameter.

Durch die direkte Verlinkung komplexer Systeminhalte mit einer digitalen Betriebsanleitung können dem Fahrer situationsabhängig relevante Zusatzinformationen bereitgestellt sein. Der Fahrer kann durch die erste Betätigung der Eingabeeinheit 104 wahlweise den relevanten Abschnitt der Bedienungsanleitung abrufen. Dadurch kann, beispielsweise je nach Vorwissen des Fahrers, jeder Informationstiefe (einschließlich des Ablehnens oder Übergehens der Zusatzinformation) entsprochen werden.

Ausgehend vom angezeigten Ausschnitt der Bedienungsanleitung, der aufgrund des erfassten Fahrzeugbezugs bei Anwahl des Verweises angezeigt wird, stellt die Steuerung 106 in Reaktion auf eine zweite Betätigung der Eingabeeinheit jeden weiteren Abschnitt der Bedienungsanleitung bereit. Dadurch ist eine zusammenhängende und in die Fahrzeugbedienung einbezogene Bereitstellung der Bedienungsanleitung (als ein einheitlich bereitgestelltes Dokument) erreicht. Ferner kann der Fahrer mittels verschiedener Suchfunktionen und/oder Unterkapiteln in der Bedienungsanleitung den Informationsgehalt nach seinen Bedürfnissen vertiefen.

Vorzugsweise wird der Verweis in kritischen Situationen in der Fahrzeugmeldung angezeigt, beispielsweise falls die Fahrzeugmeldung selten auftritt (und deshalb tendenziell unbekannte Bedienelemente oder Systeminhalte betrifft), falls Elemente für Komponenten oder Funktionen des Fahrzeugs 100 mit vielen Einstellungsmöglichkeiten in der Fahrzeugmeldung vorhanden sind und/oder bei für die Zuverlässigkeit des Fahrzeugs 100 kritischen Pflegehinweisen.

In einem Ausführungsbeispiel werden Warnhinweise, deren Auftreten unterschiedliche Gründe haben kann, durch die verlinkten Informationen ergänzt. In einer Implementierung fragt die Steuerungseinheit 106 zusätzliche Entscheidungskriterien vom Fahrer ab, um den erfassten Fahrzeugbezug einem eindeutigen Abschnitt in der Bedienungsanleitung zuzuordnen. Alternativ oder ergänzend hat der Fahrer durch die verlinkten Informationen die Möglichkeit unter Berücksichtigung seiner Fahrweise und/oder anderer Umgebungsfaktoren, die von der Systemsteuerung 106 nicht erfasst werden können, die Ursache der Fahrzeugmeldung zu identifizieren und die jeweilige Handlungsempfehlung in der Bedienungsanleitung zu beachten.

Vorzugsweise wird die Bedienungsanleitung nach Erfassen des Fahrzeugbezugs nicht ohne die erste Betätigung der Eingabeeinheit 104 bereitgestellt. Der Fahrer kann selbst entscheiden, wann (beispielsweise in welcher Fahrsituation) und/oder ob die verlinkten Informationen angezeigt werden sollen. Der Fahrer wird somit durch die Vorrichtung nicht abgelenkt oder bevormundet, indem ungefragt Erläuterungen (beispielsweise als sogenanntes Popup-Fenster) angezeigt werden.

Die Technik ermöglicht eine inhaltlich und situativ abhängige Bereitstellung einer digitalen Fahrzeugbedienungsanleitung im Fahrzeug 100 und ihre Interaktion mittels der Anzeigeeinheit 102 und der Eingabeeinheit 104. Der Aufruf der Bedienungsanleitung erfolgt situativ auf Grundlage des Verweises in der Fahrzeugmeldung und führt zu dem zu der Situation passenden Abschnitt in der Bedienungsanleitung, die beispielsweise in einem Infotainment-System oder im Kombinationsinstrument des Fahrzeugs 100 als die Anzeigeeinheit 102 angezeigt wird. Die Anzeige der Bedienungsanleitung kann einen zuvor in der Anzeigeeinheit 102 angezeigten Inhalt überdecken oder überblenden. Alternativ kann die Bedienungsanleitung in einer separaten Anzeige der Anzeigeeinheit 102 angezeigt werden.

Der Verweis kann abhängig von Komplexität und/oder Sicherheitsrelevanz der Fahrzeugmeldung bzw. des zugrundeliegenden erfassten Fahrzeugbezugs angezeigt werden. Die Steuerungseinheit 106 bestimmt, beispielsweise anhand von Komplexitätskriterien oder vorbestimmten Kategorien, ob der Verweis auf die Bedienungsanleitung in der Fahrzeugmeldung angezeigt wird oder nicht. Beispiele für komplexes Systemhalten und Systemausgaben in den Fahrzeugmeldungen umfassen Fehlermeldungen, deren mögliche Ursachen und/oder deren mögliche Auswirkungen.

Alternativ oder ergänzend fügt die Steuerungseinheit 106 den Verweis in die Fahrzeugmeldung ein, falls deren Inhalte einen geringen Bekanntheitsgrad beim Fahrer aufweisen. Der Bekanntheitsgrad kann von der Steuerungseinheit 106 aufgrund eines gespeicherten vorhergehenden Bedienungsverhaltens festgestellt werden. Hat der Fahrer beispielsweise bei derselben Fahrt auf eine ähnliche oder entsprechende Fahrzeugmeldung (beispielsweise mit demselben Fahrzeugbezug) bereits ohne die Anwahl des Verweises reagiert, kann der Verweis unterbleiben. Ist dagegen (beispielsweise in Bezug auf den durch eine Kennung bestimmten Fahrer oder bei derselben Fahrt) kein vorheriges Auftreten einer Fahrzeugmeldung mit demselben Fahrzeugbezug gespeichert, ergänzt die Steuerungseinheit 106 den Verweis in der Fahrzeugmeldung.

Ein alternatives oder weiteres Kriterium zum Anzeigen des Verweises ist eine große Anzahl der Einstellmöglichkeiten und/oder Parametriermöglichkeiten in der Fahrzeugmeldung oder für die Fahrzeugfunktion gemäß dem erfassten Fahrzeugbezug. Optional wird der Verweis bei allgemeinen Wartungshandlungen und/oder Pflegehandlungen in der entsprechenden Fahrzeugmeldung angezeigt.

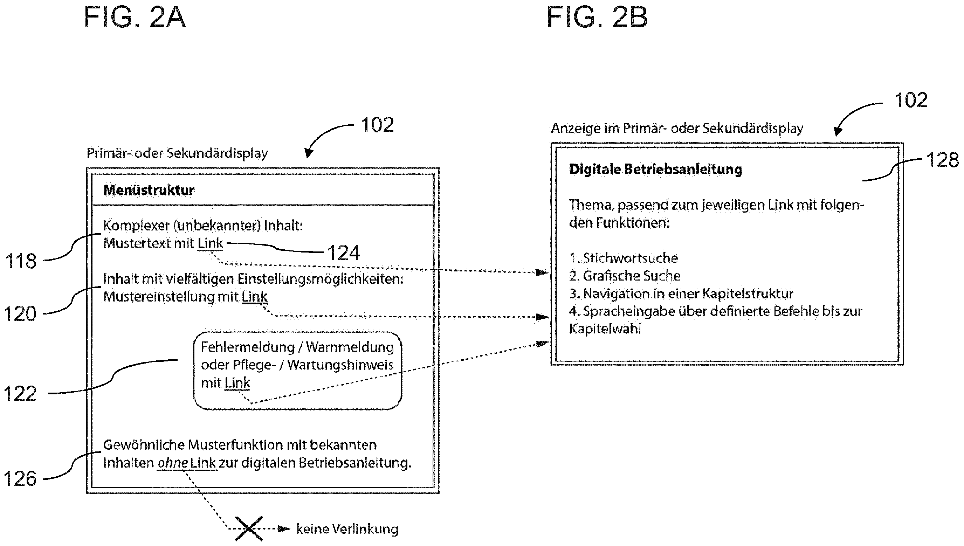

Figur 2A zeigt schematisch Beispiele 118, 120 und 122 der Fahrzeugmeldung in der Anzeigeeinheit 102. Die Beispiele 118, 120 und 122 der Fahrzeugmeldung können einzeln oder in Kombination implementiert sein.

Das Beispiel 118 der Fahrzeugmeldung enthält einen komplexen Inhalt und/oder betrifft einen seltenen Fahrzeugbezug (beispielsweise eine selten genutzte oder konfigurierte Funktion des Fahrzeugs 100). Im Fall der Fahrzeugmeldung 118 wird der Verweis 124 auf die Bedienungsanleitung in der Anzeigeeinheit 102 angezeigt, beispielsweise innerhalb eines Texts oder als Symbol neben dem Text.

Das Beispiel 120 der Fahrzeugmeldung beinhaltet eine vielfältige Einstellungsmöglichkeit. Beispielsweise sind drei oder mehr Konfigurationsparameter einer durch den Fahrzeugbezug bestimmten Fahrzeugfunktion oder Fahrzeugkomponenten einstellbar. Parameterspezifische Verweise 124 können in räumlicher Zuordnung zur Einstellmöglichkeit des jeweiligen Konfigurationsparameters angeordnet sein. Der zugeordnete Abschnitt in der Bedienungsanleitung definiert beispielsweise eine funktionale Abhängigkeit zwischen den einstellbaren Konfigurationsparametern.

Das Beispiel 122 der Fahrzeugmeldung ist eine Fehlermeldung, eine Warnmeldung, ein Pflegehinweis oder ein Wartungshinweis. Die Fahrzeugmeldung 122 kann durch einen Fahrzeugsensor, dessen Sensorwert außerhalb eines Betriebsbereichs liegt, bewirkt werden. Der Verweise 124 kann am Ende der Fehlermeldung angeordnet sein.

Ein Beispiel 126 einer Fahrzeugmeldung ohne Verweis betrifft eine häufige oder gewöhnliche Fahrzeugfunktion mit bekannten Inhalten.

Figur 2B zeigt schematisch eine mittels der Anzeigeeinheit 102 angezeigte digitale Bedienungsanleitung 128 (beispielsweise eine Betriebsanleitung) des Fahrzeugs 100. Die Bedienungsanleitung 128 ist in eine Vielzahl von Abschnitten (beispielsweise Kapitel) gegliedert. Zumindest einer Teilmenge der Abschnitte ist jeweils mindestens ein Fahrzeugbezug in einer für die Steuerungseinheit 106 lesbaren Form zugeordnet. Beispielsweise ist jedem Abschnitt der Bedienungsanleitung 128 eine Kennung (beispielsweise für eine Fahrzeugfunktion, eine Fahrzeugkomponente und/oder einen Betriebszustand) als Fahrzeugbezug zugeordnet.

Optional umfasst die Bedienungsanleitung 128 ferner eine Stichwortsuche, die durch die zweite Betätigung der Eingabeeinheit ausführbar ist. Die Stichwortsuche kann den Volltext der Bedienungsanleitung 128 durchsuchen oder auf einem Stichwortverzeichnis der Bedienungsanleitung 128 beruhen. Alternativ oder ergänzend ermöglicht die Bedienungsanleitung 128 eine grafische Suche, bei der das Fahrzeug 100 mittels der Anzeigeeinheit 102 visualisiert wird und bestimmte Fahrzeugbereiche mittels der Eingabeeinheit 104 auswählbar sind. Alternativ oder ergänzend kann durch die zweite Betätigung der Eingabeeinheit, insbesondere eine Spracheingabe, zu einem benachbarten Abschnitt der Bedienungsanleitung 128 gewechselt werden. Ausgehend vom durch den erfassten Fahrzeugbezug bestimmten Abschnitt bewirkt die Steuerungseinheit 106 einen Wechsel zu einem mittels Spracheingabe an der Eingabeeinheit 104 durch Stichworte oder Kapitelüberschriften bestimmten Abschnitt.

In mit jeder Implementierung kompatiblen Ausgestaltungen erfolgt die Bereitstellung der Bedienungsanleitung 128, d. h. der unterstützenden Information, nur im Stand des Fahrzeugs 100 und nicht während der Fahrt des Fahrzeugs 100. Beispielsweise wird die Fahrzeugmeldung 118, 120 oder 122 während der Fahrt beim Erfassen des entsprechenden Fahrzeugbezugs angezeigt. In einer ersten Ausgestaltung wird der Verweis 124 erst im Stand des Fahrzeugs 100 angezeigt. In einer zweiten Ausgestaltung bleibt die Anwahl des in der Fahrt angezeigten Verweises 124 wirkungslos oder die Bereitstellung der Bedienungsanleitung 128 ist zeitlich verzögert bis zum Stand des Fahrzeugs 100.

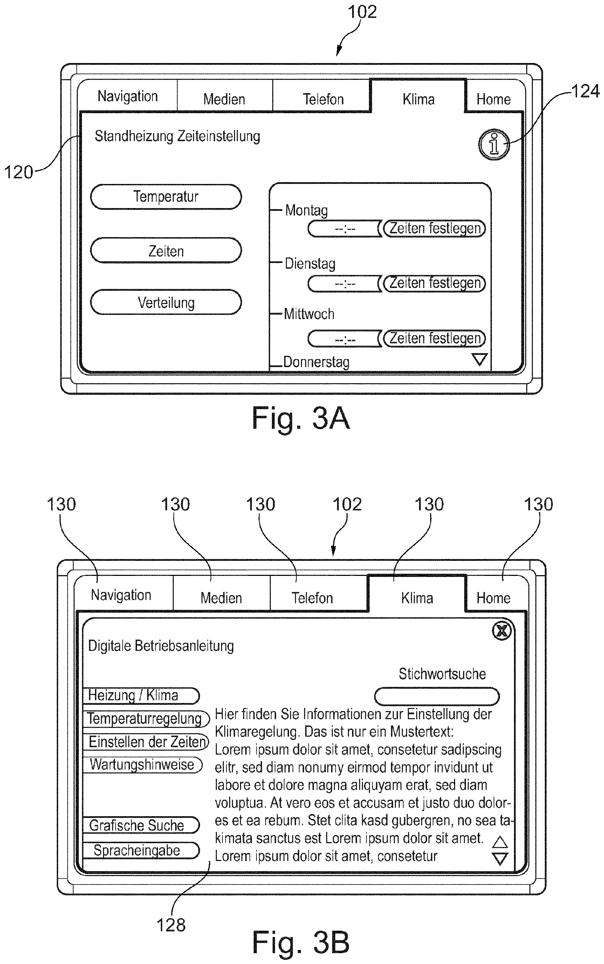

Figur 3A zeigt eine zweite Implementierung der Vorrichtung zur Einbeziehung einer Bedienungsanleitung in die Bedienung eines Fahrzeugs, die mit der in Figur 2A und 2B gezeigten ersten Implementierung kompatibel ist. Insbesondere sind übereinstimmende oder austauschbare Merkmale mit gleichen Bezugszeichen versehen.

Figur 3A zeigt schematisch ein Sekundärdisplay eines LKWs als Beispiel der Anzeigeeinheit 102. In der Anzeigeeinheit 102 ist das Menü oder Untermenü zur Einstellung einer Klimaregelung als Beispiel der Fahrzeugmeldung 120 angezeigt. Die Konfigurationsparameter der Klimaregelung umfassen Zeiten, die festlegen, wann eine Standklimafunktion eingeschaltet wird. Im in Figur 3A gezeigten Beispiel 120 der Fahrzeugmeldung ist der Verweis 124 mittels eines Grafiksymbols angezeigt, das den Buchstaben "i" für unterstützende Information enthält.

Durch die erste Betätigung der Eingabeeinheit 104, beispielsweise das Drücken eines Dreh-Drück-Stellers, wird die schematisch in Figur 3B dargestellte Bedienungsanleitung 128 angezeigt. Die Bedienungsanleitung 128 umfasst mehrere Abschnitte 130, von denen der der Fahrzeugmeldung 120 entsprechende Fahrzeugbezug (hier beispielsweise die Klimaregelung) zumindest teilweise angezeigt wird in Reaktion auf die erste Betätigung.

Während die mit Bezug auf die Figuren 3A und 3B beschriebene zweite Implementierung der Vorrichtung die Fahrzeugmeldung 120 und die Betriebsanleitung 128 sequenziell in derselben Anzeige der Anzeigeeinheit 102 ausgibt, können Fahrzeugmeldung und Bedienungsanleitung auch sequenziell oder gleichzeitig in räumlich getrennten Anzeigen der Anzeigeeinheit 102 ausgegeben werden.

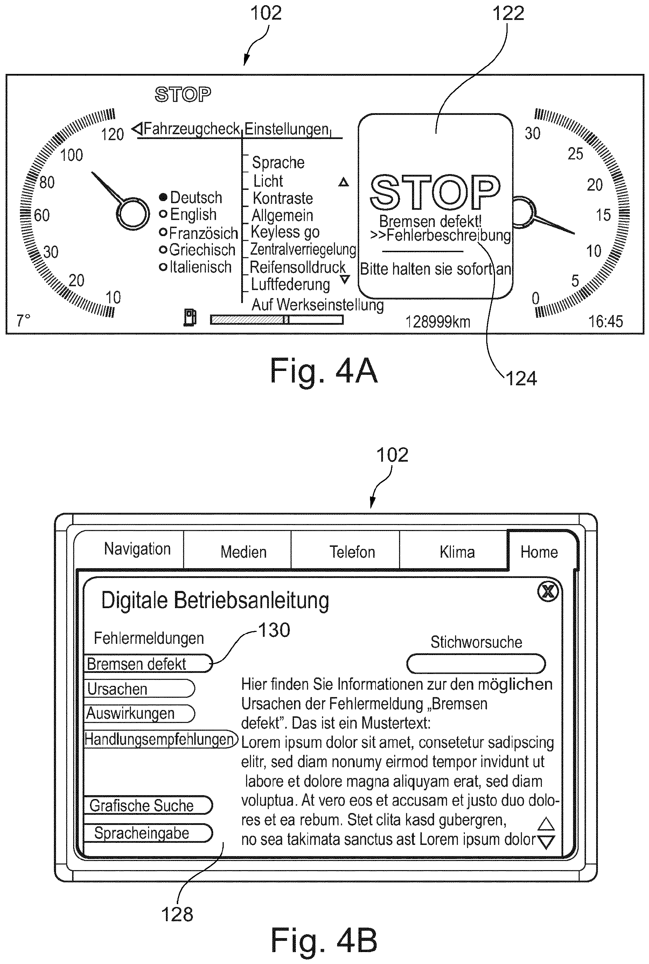

Figur 4A zeigt schematisch ein frei programmierbares Kombinationsinstrument (FPK) als Beispiel einer Anzeigefläche der Anzeigeeinheit 102 beispielsweise eines LKWs 100. Im Kombinationsinstrument ist eine Fehlermeldung als Beispiel 122 der Fahrzeugmeldung der vorherigen Anzeige überlagert. Die Fehlermeldung 122 fordert den Fahrer zum Anhalten auf. Der Fahrer bekommt über den Verweis 124 im Fenster der Fehlermeldung 122 Zugriff auf den dem Betriebszustand (hier einem Bremsdefekt) zugeordneten Abschnitt 130 der Bedienungsanleitung 128.

Die Bedienungsanleitung 128 wird in Reaktion auf die Anwahl des Verweises 124 durch die erste Betätigung der Eingabeeinheit 104 im Sekundärdisplay (beispielsweise in der Mittelkonsole) des Fahrzeugs 100 angezeigt, wie in Figur 4B schematisch dargestellt. Der zugeordnete Abschnitt der Betriebsanleitung 128 enthält Informationen über mögliche Ursachen und Auswirkungen des Fehlers bzw. über Handlungsempfehlungen zur Fehlerbehebung.

Das mit Bezugnahme auf die Figuren 4A und 4B beschriebene dritte Implementierungsbeispiel der Vorrichtung ist mit der ersten und/oder zweiten Implementierung kompatibel. Insbesondere zeigt das zweite Implementierungsbeispiel gemäß Figur 3B und das vierte Implementierungsbeispiel gemäß Figur 4B, dass die Abschnitte 130 derselben Betriebsanleitung 128 mehrfach gegliedert sein können. Beispielsweise kann eine (in Figur 3B schematisch gezeigte) Gliederung nach Fahrzeugkomponenten kombiniert werden mit einer (in Figur 4B schematisch gezeigten) Gliederung nach Betriebszuständen.

Wie anhand vorstehender Ausführungsbeispiele und Implementierungen für den Fachmann ersichtlich, ermöglicht die Technik eine direkte und unkomplizierte Unterstützung des Fahrers bei der Bewältigung von komplexen Anforderungen, die insbesondere in Nutzfahrzeugen häufig anzutreffen sind. Zudem bedeutet die Einbeziehung der Bedienungsanleitung in die Bedienung des Fahrzeugs eine Zeitersparnis für den Fahrer, da die mühsame Stichwortsuche in herkömmlichen gedruckten oder digitalen Bedienungsanleitungen vermieden wird durch die Bereitstellung des durch den erfassten Fahrzeugbezug festgelegten Abschnitts der Bedienungsanleitung.

Auch wird die Expertise eines Berufskraftfahrers durch den Einsatz der Vorrichtung weiterhin genutzt, da der Fahrer die unterstützende Information der Bedienungsanleitung nur in speziellen (beispielsweise komplexen oder seltenen) Situationen durch den selektiv angezeigten Verweis erhält und/oder tiefergehende Informationen über das spezifische Fahrzeugmodell oder tendenziell unbekannte Inhalte und Situationen wahlweise abrufen kann.

So ermöglichen Ausführungsbeispiele eine fehlerfreie Bedienung in unbekannten Situationen, erleichtern die Eingrenzung von Fehlermeldungen, Ursachen der Fehler, die Beurteilung der Auswirkung eines Fehlers und/oder bieten Handlungsempfehlungen an.

Ausführungsbeispiele der Vorrichtung können eine Zeitersparnis gegenüber der Suche in gedruckten Betriebshandbüchern und einer Stichwortsuche in digitalen Anleitungen erreichen, insbesondere ohne den Fahrer bei Kenntnis der notwendigen Handlungsschritte mit überflüssigen Informationen zu stören.

Insbesondere können Ausführungsbeispiele der Vorrichtung situativ angepasste Informationen abrufbereit stellen.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Fahrzeugmodell an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Fahrzeug
- 102: Anzeigeeinheit
- 104: Eingabeeinheit
- 106: Steuerungseinheit
- 108: Fahrerhaus
- 110: Serieller Bus
- 112: Mobilfunkschnittstelle
- 114: Tragbare Kommunikationseinheit
- 116: Mobilfunknetz
- 118, 120, 122: Fahrzeugmeldung mit Verweis
- 124: Verweis
- 126: Fahrzeugmeldung ohne Verweis
- 128: Bedienungsanleitung
- 130: Abschnitt der Bedienungsanleitung

## Patentansprüche

1. Vorrichtung zur Einbeziehung einer Bedienungsanleitung (128) in die Bedienung eines Fahrzeugs (100), umfassend:
eine Anzeigeeinheit (102), die im Fahrzeug (100) angeordnet oder anordenbar ist;
eine Eingabeeinheit (104), die im Fahrzeug (100) angeordnet oder anordenbar ist; und
eine mit der Anzeigeeinheit (102) und der Eingabeeinheit (104) in Signalverbindung stehende oder bringbare Steuerungseinheit (106), die dazu ausgebildet ist,
eine Bedienungsanleitung (128) mit einer Vielzahl von Abschnitten (130) zu speichern, wobei jedem Abschnitt (130) mindestens ein Fahrzeugbezug zugeordnet ist,
Signale mit einem Fahrzeugbezug zu erfassen,
eine Fahrzeugmeldung (118; 120; 122) an der Anzeigeeinheit anzuzeigen, die den erfassten Fahrzeugbezug angibt und einen Verweis auf die Bedienungsanleitung (128) umfasst, der durch eine erste Betätigung der Eingabeeinheit anwählbar ist, und
in Reaktion auf die erste Betätigung der Eingabeeinheit die Bedienungsanleitung (128) mittels der Anzeigeeinheit und der Eingabeeinheit bereitzustellen, wobei die Anzeigeeinheit einen Ausschnitt der Bedienungsanleitung (128) mittels der Anzeigeeinheit anzeigt, welcher mindestens einen Teil des dem erfassten Fahrzeugbezug zugeordneten Abschnitts (130) umfasst.

2. Vorrichtung nach Anspruch 1, wobei die Bedienungsanleitung (128) nur in Reaktion auf eine Betätigung der Eingabeeinheit bereitgestellt wird.

3. Vorrichtung nach Anspruch 1 oder 2, wobei ausgehend vom angezeigten Ausschnitt der Bedienungsanleitung (128) durch eine zweite Betätigung der Eingabeeinheit weitere Abschnitte (130) der Bedienungsanleitung (128) bereitstellbar sind.

4. Vorrichtung nach einem der Ansprüche 1 bis 3, wobei der Fahrzeugbezug einen Fahrzeugzustand des Fahrzeugs umfasst, und/oder die Fahrzeugmeldung (118; 120; 122) eine Zustandsmeldung des Fahrzeugs umfasst.

5. Vorrichtung nach Anspruch 4, wobei dem erfassten Fahrzeugzustand verschiedene Abschnitte (130) der Bedienungsanleitung (128) zugeordnet sind, die Kriterien zur Differenzierung des Fahrzeugzustands angeben, und wobei die Steuerungseinheit dazu ausgebildet ist, durch Betätigung der Eingabeeinheit zwischen dem Anzeigen der verschiedenen Abschnitte (130) umzuschalten.

6. Vorrichtung nach Anspruch 4 oder 5, wobei dem erfassten Fahrzeugzustand verschiedene Abschnitte (130) der Bedienungsanleitung (128) zugeordnet sind, zu denen ferner Kriterien zur Differenzierung des Fahrzeugzustands gespeichert sind, und wobei die Steuerungseinheit dazu ausgebildet ist, mittels der Anzeigeeinheit und der Eingabeeinheit die Kriterien abzufragen und aufgrund der Abfrage einen der verschiedenen Abschnitte (130) der Bedienungsanleitung (128) bereitzustellen.

7. Vorrichtung nach einem der Ansprüche 1 bis 6, wobei die Abschnitte (130) fahrzeugspezifische Angaben enthalten.

8. Vorrichtung nach einem der Ansprüche 1 bis 7, wobei dem erfassten Fahrzeugbezug eine Häufigkeit zugeordnet ist und die Steuerungseinheit dazu ausgebildet ist, den Verweis in der Fahrzeugmeldung (118; 120; 122) anzeigen, falls die zugeordnet Häufigkeit kleiner als ein Schwellwert ist.

9. Vorrichtung nach einem der Ansprüche 1 bis 8, wobei das Erfassen des Fahrzeugbezugs das Anzeigen der Fahrzeugmeldung (118; 120; 122) bewirkt.

10. Vorrichtung nach einem der Ansprüche 1 bis 9, wobei das Erfassen des Fahrzeugbezugs einen Aufruf eines Konfigurationsmenüs mittels der Eingabeeinheit umfasst, und das Anzeigen der Fahrzeugmeldung (118; 120; 122) das Anzeigen des Konfigurationsmenüs mittels der Anzeigeeinheit umfasst.

11. Vorrichtung nach einem der Ansprüche 1 bis 10, wobei das Erfassen des Fahrzeugbezugs oder eine der Betätigungen der Eingabeeinheit (104) das Erfassen einer Spracheingabe mittels der Eingabeeinheit umfasst.

12. Vorrichtung nach einem der Ansprüche 1 bis 11, wobei die Steuerungseinheit (106) in Funkkommunikation mit einer tragbaren Kommunikationseinheit (114) steht oder bringbar ist, und wobei die Steuerungseinheit dazu ausgebildet ist, beim Erfassen des Fahrzeugbezugs ein von der Kommunikationseinheit fotografisch erfasstes Bild über die Funkkommunikation zu erhalten und mittels Bilderkennung einer Fahrzeugkomponente zuzuordnen.

13. Vorrichtung nach einem der Ansprüche 1 bis 12, wobei die Anzeigeeinheit (102) eine sekundäre Anzeigefläche am Fahrerplatz des Fahrzeugs (100) umfasst und/oder an einer Mittelkonsole des Fahrzeugs angeordnet ist.

14. Fahrzeug (100), insbesondere Nutzfahrzeug, umfassend:
eine im Fahrzeug angeordnete Vorrichtung mit einer Anzeigeeinheit, einer Eingabeeinheit und einer Steuerungseinheit gemäß einem der Ansprüche 1 bis 13.
